Europäisches Patentamt

European Patent Office

Office européen des brevets

(11) Numéro de publication : **0 384 182 B1**

(12) **FASCICULE DE BREVET EUROPEEN**

(45) Date de publication du fascicule du brevet :
02.06.93 Bulletin 93/22

(51) Int. Cl.⁵ : **B60C 11/12,** B60C 3/04

(21) Numéro de dépôt : **90102037.0**

(22) Date de dépôt : **02.02.90**

(54) **Bande de roulement pour pneumatique "poids lourd", dont les nervures centrales sont munies d'incisions inclinées.**

(30) Priorité : **22.02.89 FR 8902381**

(43) Date de publication de la demande :
**29.08.90 Bulletin 90/35**

(45) Mention de la délivrance du brevet :
**02.06.93 Bulletin 93/22**

(84) Etats contractants désignés :
**AT BE CH DE DK ES FR GB GR IT LI LU NL SE**

(56) Documents cités :
**EP-A- 0 292 563**
**FR-A- 2 317 112**
**FR-A- 2 418 719**
**GB-A- 2 053 817**
**GB-A- 2 093 777**

(56) Documents cités :
**PATENT ABSTRACTS OF JAPAN, vol. 7, no. 217 (M-245)[1362], 27 septembre 1983, page 126 M 245; & JP-A-58 112 805 (YOKOHAMA GOMU K.K.) 05-07-1983**

(73) Titulaire : **COMPAGNIE GENERALE DES ETABLISSEMENTS MICHELIN - MICHELIN & CIE**
**12, Cours Sablon**
**F-63040 Clermont-Ferrand Cédex (FR)**

(72) Inventeur : **Lurois, Patrick**
**7, rue des Vergers**
**F-63118 Cebazat (FR)**

(74) Mandataire : **Bauvir, Jacques et al**
**Michelin & Cie Service K. Brevets**
**F-63040 Clermont-Ferrand Cédex (FR)**

## Description

La présente invention se rapporte aux bandes de roulement, neuves ou rechapées, pour pneumatiques à armature de carcasse radiale, destinés à équiper les véhicules de transport.

Ces pneumatiques comportent en plus de l'armature de carcasse radiale, une armature de sommet composée d'au moins deux nappes superposées de câbles peu extensibles, de préférence en acier, croisés d'une nappe à la suivante en formant avec la direction circonférentielle des angles au plus égaux à 40°. Le cas échéant, l'armature de sommet est avantageusement complétée, d'une part par deux demi-nappes, formées de câbles peu extensibles faisant avec la direction circonférentielle un angle compris entre 45° et 80°, et d'autre part par une ou plusieurs nappes formées de câbles élastiques placées radialement à l'extérieur des deux nappes de sommet à câbles peu extensibles et formant avec la direction circonférentielle un angle faible.

L'armature de sommet est surmontée d'une bande de roulement, qui comporte généralement plusieurs rainures circonférentielles qui ont des tracés soit rectilignes, soit en ligne brisée ou ondulée. Ces rainures circonférentielles ont des largeurs soit identiques, soit différentes. Dans ce dernier cas, certaines rainures sont larges et sont associées sur la même bande de roulement à des rainures plus étroites, dont la largeur, mesurée sur la bande de roulement, le pneumatique étant monté sur sa jante de service et gonflé à sa pression nominale peut être telle que, sous l'effet de la charge imposée au pneumatique, les deux parois quasi-verticales de ces rainures peuvent venir en contact sur tout ou partie de leur hauteur.

Afin d'améliorer l'adhérence longitudinale de telles bandes de roulement, il est connu de prévoir la présence de rainures transversales dont l'orientation moyenne est comprise entre 45° et 90° par rapport à la direction circonférentielle du pneumatique. Ces rainures transversales ont généralement des largeurs faibles, inférieures à 3 mm, et peuvent donc être dénommées "incisions". Ces incisions dont les tracés peuvent être rectilignes, en ligne brisée ou ondulée, soit assurent la jonction entre deux rainures circonférentielles, soit prennent naissance à l'intérieur d'une nervure circonférentielle pour déboucher sur une seule rainure circonférentielle, soit ne débouchent sur aucune rainure circonférentielle. Les incisions qui débouchent sur les deux rainures délimitant une nervure, sont de loin les plus efficaces en adhérence, leur adhérence sur sols neigeux peut encore être améliorée par l'inclinaison des incisions par rapport à la normale à la surface de la bande de roulement. Le brevet GB-A-2 093 777 (correspondant au préambule de la revendication 1) précise cette inclinaison en fonction du sens de rotation du pneumatique et enseigne, pour l'amélioration sur sol neigeux, que les bords d'attaque des éléments en relief délimités circonférentiellement par les incisions doivent présenter un angle aigu.

Par définition, le bord d'attaque d'un élément en relief est le bord qui pénètre le premier dans la surface de contact entre le pneumatique et le sol, le pneumatique ayant évidemment un sens de rotation donné, le bord de fuite pénétrant donc dans la surface de contact après le bord d'attaque.

Quant à l'angle aigu des bords d'attaque, c'est l'angle formé par la surface de la bande de roulement et la paroi de l'incision correspondante.

Afin d'avoir un pneumatique où le sens de rotation n'est pas imposé à l'utilisateur, la bande de roulement d'un tel pneumatique est pourvu d'incisions inclinées de la manière décrite ci-dessus, et d'incisions inclinées dans le sens inverse.

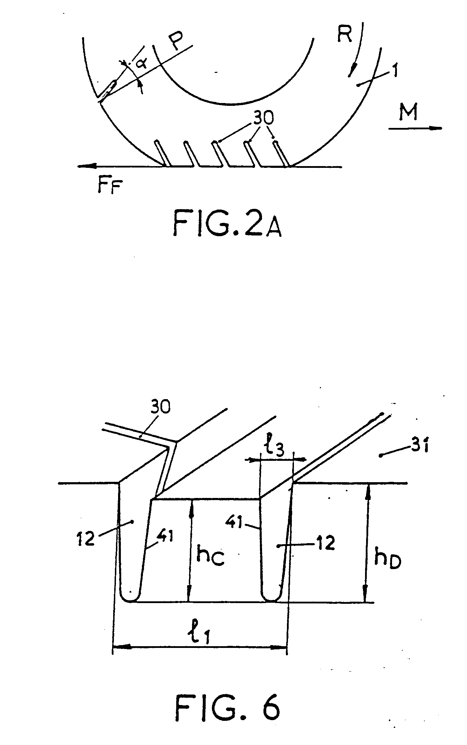

Ces incisions donnent lieu à une forme d'usure irrégulière bien particulière. Si l'on considère l'inclinaison montrée sur la figure 2 de l'antériorité, l'usure apparaît et se développe sur la surface située du côté d'un bord de fuite de l'élément en relief délimité par les deux rainures circonférentielles et les deux incisions transversales, plus rapidement que sur la surface située du côté de l'autre bord, c'est-à-dire le bord d'attaque. Tel est l'enseignement délivré par le brevet FR-A-2 418 719, par exemple, brevet qui décrit l'inclinaison des incisions comme nécessaire à la formation et à l'auto-entretien de l'usure irrégulière des lamelles de gomme entre incisions voisines, usure nécessaire pour le maintien des propriétés d'adhérence sur la neige et la glace.

Cette forme d'usure est d'autant plus néfaste que la bande de roulement décrite est une bande de roulement pour pneumatique équipant les véhicules "Poids Lourd" susceptibles d'effectuer de longs trajets à vitesse soutenue, et qu'elle affecte les éléments en relief situés sur les nervures de la bande de roulement comprises entre deux rainures circonférentielles, et plus particulièrement les nervures délimitées dans le sens axial, par deux rainures de largeur différente.

Les pneumatiques "Poids lourd" sont montés soit sur l'essieu directeur du véhicule, soit sur un essieu moteur, ces deux essieux étant également porteurs, soit sur un essieu seulement porteur, et la forme d'usure décrite est fortement pénalisante pour les bandes de roulement de pneumatiques directeurs et porteurs, c'est-à-dire les pneumatiques qui ne sont pas soumis à un couple moteur.

L'invention se propose de remédier à la forme d'usure irrégulière décrite ci-dessus et en conséquence d'améliorer la longévité sur usure de la bande de roulement tout en conservant une bonne tenue du pneumatique vis-à-vis du viscoplanage et de l'hydroplanage.

Conformément à l'invention, une bande de roulement pour pneumatique à armature de carcasse radiale surmontée d'une armature de sommet, destiné à équiper l'(es) essieu(x) non moteur(s) des véhicules de transport de moyen et fort tonnage, comprenant des rainures circonférentielles de façon à munir la bande de roulement d'au moins cinq nervures, au moins les nervures, délimitées par deux rainures circonférentielles, étant pourvues d'incisions débouchant sur les deux rainures, inclinées d'un angle compris entre 5° et 25° par rapport à la direction perpendiculaire à la bande de roulement dans le sens tel que la force résultante freineuse exercée en roulage, dans l'ellipse de contact, par le sol sur la bande de roulement tendre à redresser les incisions vers une inclinaison nulle part rapport à ladite perpendiculaire à la bande de roulement lesdites incisions étant de largeur non nulle, inférieure à 3 mm, transversales et sensiblement parallèles entre elles, est caractérisée en ce que les incisions sont distantes circonférentiellement d'un pas compris entre O,005 et 0,013 fois la longueur circonférentielle du pneumatique, mesurée dans le plan équatorial, et toutes les incisions sont inclinées dans le même sens, la bande de roulement ayant dans sa partie axiale comprise entre les deux rainures axialement les plus extérieures un rayon de courbure transversal moyen au moins égal à 50 % du rayon de courbure équatorial du pneumatique monté sur sa jante normale de service, gonflé à sa pression nominale, recommandée, supérieure à 5 bars.

Dans le cas de montage sur un essieu directeur ou sur un essieu seulement porteur, c'est-à-dire les essieux où aucun couple moteur ne s'exerce, la force résultante exercée par le sol sur la bande de roulement est, comme connu, une force freineuse, c'est-à-dire dont le sens est l'inverse du sens de la marche du véhicule.

L'inclinaison revendiquée est fonction de la force exercée dans l'ellipse de contact et le sens de rotation est alors imposé au pneumatique.

Dans le cas d'un pneumatique Poids lourd, roulant sous ses conditions normales ou nominales de roulage (charge, pression) pour l'utilisation prévue, pourvu d'une bande de roulement telle que décrite ci-dessus, l'inclinaison des incisions, délimitant par elles-mêmes les éléments en relief de longueur circonférentielle importante comparativement à la distance séparant deux incisions voisines revendiquées dans les brevets cités, permet une diminution considérable des efforts exercés par le sol sur les bords de fuite des éléments en relief, et fait en sorte que le rapport de la résultante de ces efforts sur la charge subie par l'élément reste le plus longtemps possible inférieur au coefficient d'adhérence de la bande de roulement. Les glissements réels entre le sol et la bande de roulement sont ainsi diminués, et en conséquence l'apparition de l'usure des bords de fuite des éléments en relief.

Le pneumatique étant destiné à une utilisation sur un essieu directeur, ou sur un essieu simplement porteur, il est préférable d'appliquer l'invention à une bande de roulement comprenant au plus deux rainures circonférentielles larges, associées à des rainures relativement étroites. Ces rainures sont délimitées par deux nervures et une rainure à deux parois de hauteurs soit identiques, soit différentes. Dans le cadre de l'invention, il faut entendre par rainure large une rainure dont la largeur, mesurée sur la bande de roulement du pneumatique, monté sur sa jante de service et gonflé à la pression recommandée, est supérieure à 1,7 fois la racine carrée de la hauteur de la paroi la plus grande. Une rainure sera dite étroite, si sa largeur est inférieure à 1,2 fois la racine carrée de la hauteur de paroi la plus grande. Les deux rainures larges sont préférentiellement distantes axialement d'au plus 0,45 fois la largeur de la bande de roulement, et situées symétriquement de part et d'autre de la ligne équatoriale du pneumatique.

L'invention se montre particulièrement avantageuse pour un pneumatique pourvu d'une bande de roulement comprenant une seule rainure circonférentielle large, localisée au centre de la bande de roulement, et au moins quatre rainures étroites situées de part et d'autre de ladite rainure centrale, les largeurs de ces rainures répondant aux définitions ci-dessus. Une telle configuration de bande de roulement est décrite dans le brevet FR-A-1 584 734. L'application de l'invention à ce type de bande de roulement permet alors une amélioration notable de l'usure, les pertes de poids par kilomètre étant encore plus faibles que dans le cas où la bande de roulement présente deux rainures larges, l'effet produit par les incisions conformes à l'invention étant alors supérieur au même effet produit dans le cas d'une bande de roulement comportant deux rainures larges.

Quel que soit le type de bande de roulement utilisé, l'effet produit par les incisions conformes à l'invention est considérablement et avantageusement accentué par la présence dans la(les) rainure(s) large(s) de redent(s) ou cordon(s) en relief non incisé(s) dont la hauteur est comprise entre 90 % et 50 % de la profondeur de la/des rainures larges, les deux rainures créées entre les parois des nervures et les parois d'un redent ayant une largeur axiale au plus égale à 35 % de la largeur de la rainure large.

Il est de même avantageux, conformément à l'invention, de prévoir, pour les éléments en relief de la région de la bande de roulement comprise entre les deux rainures axialement les plus éloignées du centre, un bord de fuite surélevé radialement par rapport au bord d'attaque, d'une hauteur au plus égale à 25 % de la hauteur de la paroi délimitant le bord d'attaque de l'élément en relief. Pour les bandes de roulement de l'espèce considérée, la différence de hauteurs entre la paroi du bord d'attaque et la paroi du bord de fuite est alors au plus égale à 4,5 mm.

Cette différence de hauteur, dans le cas d'un élément en relief compris entre deux rainures étroites est avantageusement constante sur toute la largeur de l'élément en relief. Dans le cas d'un élément en relief compris entre une rainure étroite et une rainure large, munie ou non d'un redent, cette différence de hauteur est avantageusement variable, étant plus importante du côté de la rainure large.

Si l'on considère la longueur de l'élément en relief, dimension mesurée dans le sens circonférentiel, cette différence de hauteur décroît régulièrement du bord de fuite au bord d'attaque, en fonction de la distance circonférentielle, ou peut décroître de toute autre manière, par exemple rester constante sur une distance circonférentielle au plus égale à 50 % de la longueur de l'élément en relief et décroître ensuite linéairement sur la distance circonférentielle restante.

Il est de même avantageux, quel que soit le type de bande de roulement conforme à l'invention d'abaisser radialement les nervures des bords de la bande de roulement par rapport aux nervures axialement intérieures les plus proches, la paroi axialement extérieure de la rainure étroite axialement la plus éloignée du centre ayant une hauteur plus petite que la paroi axialement intérieure, la différence étant comprise entre O,05 et O,50 fois la hauteur de la paroi axialement intérieure.

Le dessin et la partie de la description qui y fait référence illustrent des exemples d'application de l'invention. Sur ce dessin :
- la figure 1 est une vue en plan d'une portion de bande de roulement pour pneumatique "Poids lourd" selon l'invention,
- la figure 2 A est un schéma montrant l'inclinaison des incisions en fonction de l'effort résultant freineur exercé dans l'ellipse de contact entre le pneumatique et le sol.
- la figure 3 est une vue en plan d'une portion de bande de roulement pour le même type de pneumatique selon une première variante conforme à l'invention,
- la figure 4 est une vue en coupe suivant la ligne AA de la figure 3,
- la figure 5 est une vue en plan d'une portion de bande de roulement selon une deuxième variante d'exécution.
- la figure 6 est une vue de détail en coupe suivant la ligne AA de la figure 5.
- la figure 7 est une vue de détail en coupe suivant la ligne BB de la figure 5, selon une variante préférentielle.
- la figure 8 est une vue en section radiale d'une autre variante conforme à l'invention.

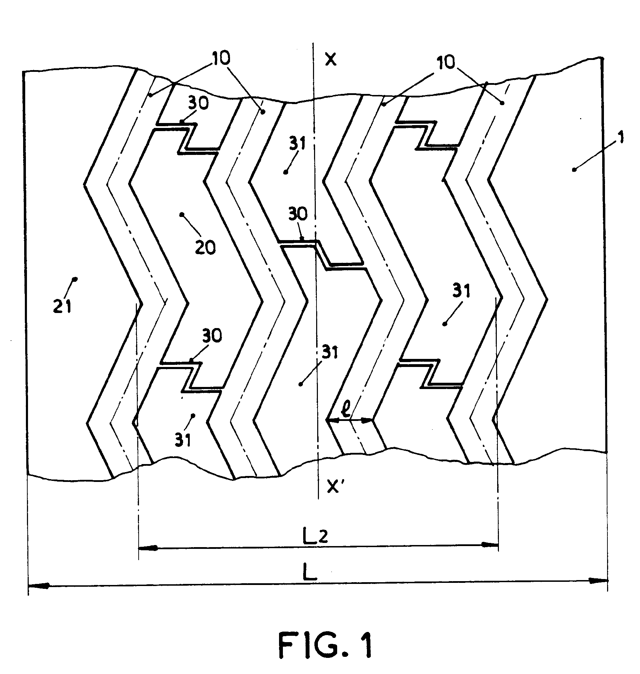

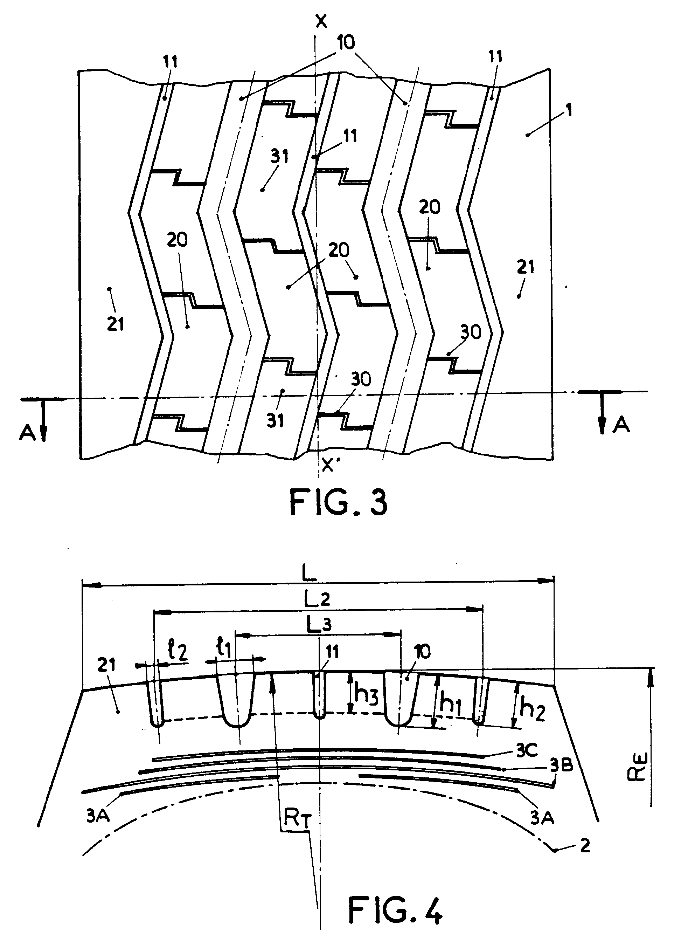

La bande de roulement (1) de largeur (L) de la figure 1 comprend quatre rainures circonférentielles (10) relativement larges, de largeur (1) égale à 10 mm, la profondeur de ces rainures ($h_1$) (figure 4) étant de 14 mm. Ces rainures (10) délimitent entre elles cinq nervures. Les trois nervures centrales (20) sont munies d'incisions (30) alors que les deux nervures (21) des bords de la bande de roulement ne le sont pas.

Ces incisions (30) sont transversales et sensiblement parallèles entre elles. Il faut entendre par incisions transversales des incisions dont la direction sur la bande de roulement fait un angle avec la direction circonférentielle au moins égal à 50°. Elles sont parallèles entre elles, lorsque leurs directions ne diffèrent que d'un angle au plus égal à 10°. Elles ont une largeur de 0,6 mm.

La distance axiale ($L_2$) séparant les deux rainures axialement les plus extérieures est égale à 65 % de la largeur L de la bande de roulement. Le rayon transversal moyen ($R_T$) de cette région de largeur ($L_2$), est égal à 80 % du rayon équatorial ($R_E$) msuré dans le plan équatorial, dont la trace est XX' (figure 4).

Le schéma (2A) montre le sens d'inclinaison des incisions (30). Elles sont toutes inclinées par rapport à la direction perpendiculaire (P) à la bande de roulement (1) d'un angle $\alpha$ égal à 7° dans le cas considéré.

Si M désigne le sens de marche Avant du véhicule équipé, et F l'effort résultant exercé par le sol sur la bande de roulement, dans l'ellipse de contact, les incisions (30) sont inclinées de telle sorte que l'effort F tend à redresser les incisions vers une inclinaison nulle, la force F agissant sur la surface des éléments en relief (31) en contact avec le sol, comme montré sur le schéma (figure 2A), où la force F est une force freineuse $F_F$, dont le sens est inverse du sens de marche du véhicule, et le pneumatique est donc un pneumatique porteur, directeur ou non, sur lequel on peut alors graver une flèche indiquant le sens de rotation R imposé au pneumatique.

La bande de roulement (1) de largeur (L) de la figure 3 ne comprend que deux rainures circonférentielles (10) relativement larges, de même largeur ($l_1$) 10 mm que précédemment pour une profondeur ($h_1$) de 14 mm. Ces rainures (10) sont dans cet exemple distantes axialement d'une largeur ($L_3$) au plus égale à 0,45 L. De part et d'autre de ces rainures (10) sont situées des rainures étroites (11) dont la largeur ($l_2$) est égale à 3,5 mm. Ces rainures larges (10) et ces rainures étroites (11) délimitent entre elles, six nervures. Les quatre nervures centrales (20) sont munies d'incisions (30) du même type que dans le cas de la figure (1), alors que les deux nervures (21) des bords de la bande de roulement ne le sont pas.

La figure 4 est une vue partielle en coupe, suivant la ligne AA de la figure 1, du sommet du pneumatique.

L'armature de carcasse radiale (2) est surmontée d'une armature de sommet (3) formée essentiellement de deux demi-nappes de triangulation (3A) de câbles métalliques peu extensibles et formant avec la direction circonférentielle un angle de 65°, de deux nappes (3B) de travail de câbles métalliques peu extensibles croisés d'une nappe à la suivante et orientés par rapport à la même direction circonférentielle d'un angle au plus égal à 40°, ces deux nappes (3B) étant surmontées radialement d'une nappe (3C) de câbles élastiques orientés sensiblement au même angle que les câbles des nappes (3B). Quant aux profondeurs respectives ($h_1$), ($h_2$), ($h_3$) des rainures larges (10), des rainures étroites (11) et des incisions (30), elles sont telles, dans le cas montré, que ($h_1$) est légèrement supérieure à ($h_2$), elle-même légèrement supérieure à ($h_3$). Les différences étant de l'ordre de 2 mm dans le cas du type de pneumatique considéré.

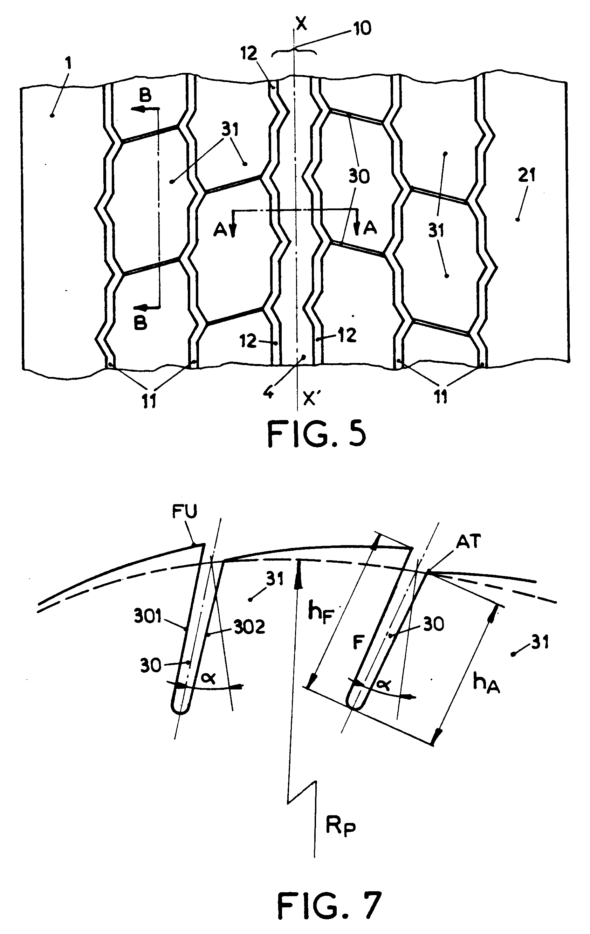

La figure 5 représente une seconde variante d'une bande de roulement conforme à l'invention. La bande de roulement (1) décrite sur cette figure ne comporte qu'une seule rainure circonférentielle large (10) de 12 mm et, situées de part et d'autre de cette rainure et de manière symétrique, quatre rainures dites étroites (11) de 4 mm. Des incisions (30) découpent les nervures créées en éléments en relief (31). La particularité montrée sur cette figure concerne la présence d'un redent (4) dans la rainure circonférentielle large (10) du centre de la bande de roulement (1). Comme montré sur la figure 6, les parois (41) de ce redent (4) forment avec les parois des éléments en relief (31) adjacents à la rainure centrale (10) des rainures (12) dont la largeur ($l_3$) est égale à O,20 fois la largeur ($l_1$) de la rainure large soit 2,4 mm. La hauteur ($h_C$) des parois (41) axialement intérieures des rainures (12) est inférieure à la hauteur ($h_D$) de 18 mm des parois axialement extérieures des mêmes rainures, telle que la différence $h_D$ - $h_C$ soit égale à 20 % de ($h_D$). Les caractéristiques ci-dessus d'un tel redent permettent de minimiser les mouvements transversaux des éléments en relief (31), tout en permettant une évacuation d'eau suffisante dans le cas d'un pneumatique "Poids lourd" qui, du fait de sa pression de gonflage supérieure à 5 bars et donc de la pression de contact entre le sol et la bande de roulement, est peu sensible au phénomène d'hydroplanage dans les conditions de vitesse usuellement utilisées.

La figure 7 montre une troisième caractéristique qui, en combinaison avec l'inclinaison des incisions et la présence d'un redent dans la ou les rainures larges, améliore la résistance des éléments en relief à l'usure irrégulière étudiée. Appliquée à une bande de roulement telle que montrée figure (5) et suivant une coupe longitudinale BB, cette caractéristique consiste à surélever les bords de fuite par rapport aux bords d'attaque, la hauteur ($h_F$), mesurée parallèlement à la direction de l'incision (30), de la paroi (301) du côté bord de fuite (FU) de l'élément en relief (31), étant supérieure à la hauteur ($h_A$) de la paroi (302) du côté bord d'attaque (AT) de l'élément en relief (31) adjacent, la différence $h_F$ - $h_A$ étant comprise entre 1 mm et 4,5 mm pour les pneumatiques étudiés.

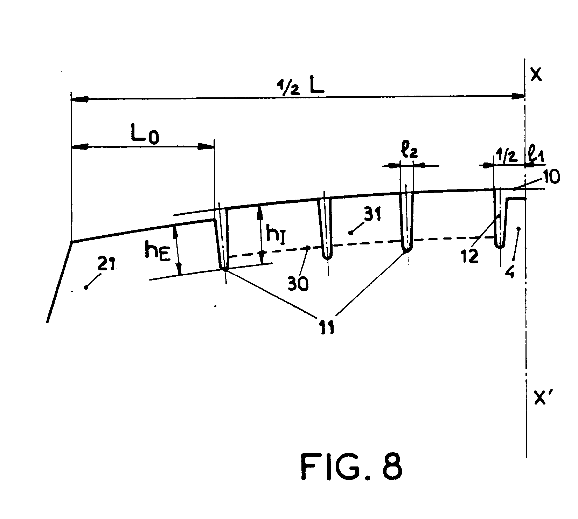

Quant à la figure 8, vue en coupe transversale d'une demi bande de roulement, elle montre une variante préférentielle portant sur la structure de la nervure (21) du bord de la bande de roulement (1). Celle-ci ne comporte pas d'incisions (30) et présente une largeur (Lo) au moins égale à 13 % de la largeur (L) de la bande de roulement, largeur supérieure à la largeur d'un élément en relief (31) du fait de la présence, en plus de la rainure centrale (10) munie d'un redent (4) de 3 rainures étroites (11) situées du même côté de la rainure (10). En outre la nervure (21) est abaissée par rapport à l'élément en relief (31) adjacent axialement : la hauteur ($h_E$) axialement extérieure de la rainure (11) la plus éloignée axialement de l'axe XX' étant plus faible que la hauteur ($h_I$) axialement intérieure de la même rainure (11) la différence $h_I$ - $h_E$ étant comprise entre 0,5 mm et 5 mm pour les dimensions de pneumatiques considérés.

Les bandes de roulement décrites ci-dessus ont fait l'objet de tests d'usure, pratiqués sur des pneumatiques 295/80 R 22.5 à armature de carcasse radiale, et gonflés à leur pression nominale de 8 bars. Ces tests sont effectués sur véhicules "Poids Lourd", roulant sur un circuit type autoroutier, c'est-à-dire présentant très peu de virages, à une vitesse moyenne de 90 km/h.

Les résultats obtenus et donnés à titre d'exemples pour des pneumatiques directeurs, car les plus sensibles au phénomène étudié, sont décrits sous forme de tableau. Le tableau (I) montre d'une part les taux d'usure, c'est-à-dire la perte de poids moyenne aux $10^3$ km parcourus en considérant comme base 100 la perte de poids obtenue avec un pneumatique équipé d'une bande de roulement à deux rainures larges et trois rainures étroites, dépourvues d'incisions, et d'autre part le nombre de kilomètres parcourus par le pneumatique pour que l'usure irrégulière du bord de fuite soit considérée comme apparue et néfaste.

Cette usure irrégulière est mesurée par la différence de hauteur entre le bord d'attaque d'un élément en relief et son bord de fuite, et une différence de hauteur de 2 mm est considérée comme usure irrégulière néfaste.

Le tableau (II) met en évidence l'influence de la présence d'un redent en combinaison avec l'inclinaison des incisions, dans le cas par exemple d'une bande de roulement à une seule rainure large.

## TABLEAU I

| Incisions / Type bande de roulement | Pas d'incision | Incision à 0° sur 4 nervures centrales | Incisions inclinées à 7° sur 4 nervures centrales |
|---|---|---|---|
| 2 rainures larges 3 rainures étroites | 100 | 120 35 000 km | 95 60 000 km |
| 1 rainure centrale 4 nervures étroites | 75 | 97 50 000 km | 60 120 000 km |

## TABLEAU II

| Redent / Incisions | Avec Redent | Sans Redent |
|---|---|---|
| Incisions à 0° | 70 000 km | 50 000 km |
| Incisions à 7° | 180 000 km | 120 000 km |

Bien que ces résultats soient entachés d'une dispersion de mesure de l'ordre de 10 %, ils mettent clairement en évidence, deux faits :

- L'inclinaison des incisions à un effet beaucoup plus puissant dans le cas d'une bande de roulement à une seule rainure centrale et large ; et quelle que soit la bande de roulement, l'inclinaison compense largement en perte de poids la déchéance due à la présence même d'incisions.
- La présence d'un redent dans la rainure large a un effet beaucoup plus puissant dans le cas d'incisions inclinées que dans le cas d'incisions à inclinaison nulle, en ce qui concerne l'apparition d'une usure irrégulière néfaste, les pertes de poids n'étant pas significativement différentes.

Quant à la surélévation des bords de fuite des éléments en relief par rapport à leurs bords d'attaque, ayant pour fonction d'améliorer le potentiel d'adhérence des bords de fuite, elle permet de repousser le kilométrage d'apparition de l'usure irrégulière à plus de $200.10^3$ km sur le même circuit autoroutier, dans le cas de l'utilisation en combinaison avec les incisions inclinées et la présence d'un redent.

**Revendications**

1. Bande de roulement (1), pour pneumatique à armature de carcasse radiale (2) surmontée d'une armature de sommet (3), destine à équiper l(les) essieux(x) non moteurs(s) des véhicules de transport de moyen et fort tonnage comprenant des rainures circonférentielles (10), de façon à munir la bande de roulement (1) d'au moins cinq nervures (20), au moins les nervures (20) délimitées par deux rainures circonférentielles (10) sont pourvues d'incisions (30) débouchant sur les deux rainures, inclinées d'un angle $\alpha$ compris entre 5° et 25° par rapport à la direction perpendiculaire (P) à la bande de roulement dans le sens tel que la force résultante freineuse exercée en roulage dans l'ellipse de contact, par le sol sur la bande de roulement (1) tende à redresser les incisions (30) vers une inclinaison nulle par rapport à ladite perpendiculaire (P) à la bande de roulement (1), lesdites incisions (30) étant de largeur non nulle, inférieure à 3 mm, transversales et sensiblement parallèles entre elles, caractérisée en ce que les incisions sont distantes circonférentiellement d'un pas compris entre 0,005 et 0,013 fois la longueur circonférentielle du pneumatique, mesurée dans le plan équatorial, et toutes les incisions (30) sont inclinées dans le même sens, la bande de roulement ayant dans sa partie axiale comprise entre les deux rainures (10, 11) axialement les plus extérieures un rayon de courbure transversal ($R_T$) au moins égal à 50 % du rayon de courbure équatorial ($R_E$) du pneumatique monté sur sa jante nominale de service, et gonflé à la pression recommandée, supérieur à 5 bars.

2. Bande de roulement selon la revendication 1, caractérisée en ce qu'elle comprend au plus deux rainures larges (10) et des rainures étroites (11), la largeur $l_1$ des rainures larges étant supérieure à 1,7 fois la racine carrée de la hauteur $h_1$ de la paroi la plus grande d'une rainure (10) et la largeur $l_2$ d'une rainure étroite étant inférieure à 1,2 fois la racine carrée de la hauteur $h_2$ de la paroi la plus grande de la rainure (11).

3. Bande de roulement selon la revendication (2), caractérisée en ce que les deux rainures larges (10) sont distantes axialement d'une largeur $L_3$ au plus égale à 0,45 L, L étant la largeur de la bande de roulement (1), et situées symétriquement de part et d'autre de la ligne équatoriale XX'.

4. Bande de roulement selon la revendication 2, caractérisée en ce qu'elle comprend une seule rainure large (10), localisée au centre de la bande de roulement, au moins quatre rainures étroites (11) étant situées de part et d'autre de la rainure large centrale (10).

5. Bande de roulement selon l'une des revendications 1 à 4, caractérisée en ce que la(les) rainure(s) large(s) (10) est(sont) munie(s) d'un(de) redent(s) ou cordon(s) en relief(4) non incisés, dont la hauteur $h_C$ est comprise entre O,90 et O,50 fois la hauteur $h_D$ des éléments en relief (31) adjacents, les hauteurs $h_C$ et $h_D$ étant mesurées par rapport au fond des rainures circonférentielles (12) créées par les parois (41) du redent (4) et les parois des eléments en relief (31), chaque rainure (12) ayant une largeur axiale ($l_3$) au plus égale à O,35 fois la largeur ($l_1$) de la rainure large (10) initiale.

6. Bande de roulement selon l'une des revendications 1 à 4 caractérisée en ce que la hauteur $h_F$ de la paroi (301) de chaque élément en relief (31), située du côte du bord de fuite (FU) de l'element est supérieure à la hauteur $h_A$ de la paroi (302) de l'élément en relief adjacent, située du côte du bord d'attaque de l'élément adjacent, ces deux hauteurs étant mesurées parallèlement à la direction des incisions, et la difference $h_F - h_A$ étant au plus égale à 25 % de la hauteur $h_A$.

7. Bande de roulement selon l'une des revendications 1 à 5, caractérisée en ce que les nervures (21) des bords de la bande de roulement (1) ne comportent pas d'incisions (30), les hauteurs $h_E$ axialement extérieures des rainures (11) les plus éloignées axialement de la ligne équatoriale XX' étant plus faibles que les hauteurs $h_I$ axialement intérieures des mêmes rainures (11), la différence $h_I - h_E$ étant comprise entre 0,05 et 0,50 fois la hauteur $h_I$ axialement intérieure.

**Patentansprüche**

1. Lauffläche (1) für Reifen mit von einer Oberseitenarmierung (3) überdeckten Radialarmierung (2) der Karkasse zur Ausrüstung der nichtantreibende(n) Achse(n) von Lastkraftwagen mit mittlerer bis hoher Ton-

7

nage, die umlaufende Rillen (10) in der Weise umfaßt, daß die Lauffläche (1) mindestens fünf Rippen (20) erhält, wobei zumindest die von zwei umlaufenden Rillen (10) begrenzten Rippen (20) mit an den beiden Rillen endenden, gegen die zur Lauffläche senkrechte Richtung (P) um einen Winkel $\alpha$ zwischen 5° und 25° geneigten Einschnitten (30) versehen sind, wobei deren Neigungsrichtung so ist, daß die in der Kontaktellipse beim Rollen vom Untergrund auf die Lauffläche (1) wirkende resultierende Bremskraft dahingehend wirkt, daß die Einschnitte (30) in Richtung einer verschwindenden Neigung gegen die Senkrechte (P) der Lauffläche (1) in gleicher Richtung aufgerichtet werden, wobei die Breite der Einschnitte (30) von Null verschieden aber geringer als 3 mm ist, und wobei die Einschnitte (30) quer und im wesentlichen parallel zueinander verlaufen, dadurch gekennzeichnet, daß die Einschnitte in Umfangsrichtung voneinander um das 0,005- bis 0,013-fache der Umfangslänge des Reifens, gemessen in der Äquatorialebene, entfernt sind und daß alle Einschnitte in die gleiche Richtung geneigt sind, wobei die Laufflächee (1) in ihrem axialen Bereich zwischen den beiden axial am weitesten außen liegenden Rillen (10, 11) einen transversalen Krümmungsradius ($R_T$) von mindestens 50% des äquatorialen Krümmungsradius ($R_E$) des auf seiner nominellen Arbeitsfelge aufgezogenen und auf den empfohlenen Druck von über 5 bar aufgepumpten Reifens hat.

2. Lauffläche nach Anspruch 1, dadurch gekennzeichnet, daß sie höchstens zwei breite Rillen (10) sowie schmale Rillen (11) umfaßt, wobei die Maßzahl der Breite $l_1$ der breiten Rillen größer als des 1,7-fache der Quadratwurzel der Maßzahl der Höhe $h_1$ der höchsten Wand einer Rille (10), und die Maßzahl der Breite $l_2$ einer schmalen Rille geringer als des 1,2-fache der Quadratwurzel der Maßzahl der Höhe $h_2$ der höchsten Wand der Rille (11) ist, wobei alle Maßzahlen auf die Einheit Millimeter bezogen sind.

3. Lauffläche nach Anspruch 2, dadurch gekennzeichnet, daß die beiden breiten Rillen (10) axial voneinander um eine Breite $L_3$ von höchstens 0,45 L voneinander getrennt sind, wobei L die Breite der Lauffläche (1) bezeichnet, und symmetrisch auf beiden Seiten der Äquatoriallinie XX' liegen.

4. Lauffläche nach Anspruch 2, dadurch gekennzeichnet, daß sie eine einzige breite Rille (10) umfaßt, die in der Mitte der Lauffläche liegt und mindestens vier schmale Rillen (11), die auf beiden Seiten der zentralen breiten Rille (10) liegen.

5. Lauffläche nach einem der Ansprüche 1 bis 4, dadurch gekennzeichnet, daß die breite(n) Rille(n) (10) mit vorspringenden, nicht eingeschnittenen Balken oder Bändern (4) versehen sind, deren Höhe $h_C$ zwischen dem 0,90-fachen und dem 0,50-fachen der Höhe $h_D$ der benachbarten vorspringenden Elemente (31) beträgt, wobei die Höhen $h_C$ und $h_D$ mit Bezug auf den Boden der umlaufenden Rillen (12) gemessen werden, die von den Wänden (41) des Balkens (4) und den Wänden der vorspringenden Elemente (31) gebildet werden und wobei jede Rille (12) eine axiale Breite ($l_3$) hat, die höchstens das 0,35-fache der Breite $l_1$ der ursprünglichen breiten Rille (10) beträgt.

6. Lauffläche nach einem der Ansprüche 1 bis 5, dadurch gekennzeichnet, daß die Höhe $h_F$ der an der Hinterkante (FU) liegenden Wand (301) eines jeden vorspringenden Elements (31) größer ist als die Höhe $h_A$ der an der Stirnkante des benachbarten vorspringenden Elements liegenden Wand (302), wobei beide Höhen parallel zur Richtung der Einschnitte gemessen werden, und daß die Differenz $h_F - h_A$ höchstens 25% der Höhe $h_A$ beträgt.

7. Lauffläche nach einem der Ansprüche 1 bis 6, dadurch gekennzeichnet, daß die Rippen (21) an den Rändern der Lauffläche (1) keine Einschnitte (30) aufweisen und die axial äußeren Höhen $h_E$ der axial am weitesten von der Achse XX' entfernten Rillen (11) geringer als die axial inneren Höhen $h_I$ derselben Rillen (11) sind, wobei die Differenz $h_I - h_E$ zwischen dem 0,05-fachen und dem 0,5-fachen der axial inneren Höhe $h_I$ liegt.

## Claims

1. A tread (1) for a tyre with radial carcass reinforcement (2) surmounted by a crown reinforcement (3), for equipping the non-driving axle(s) of medium and high-tonnage transport vehicles, comprising circumferential grooves (10) so as to provide the tread (1) with at least five ribs (20), at least the ribs (20) delimited by two circumferential grooves (10) being provided with incisions (30) opening on to the two grooves, inclined at an angle $\alpha$ of between 5° and 25° with respect to the direction perpendicular (P) to the tread, in a direction such that the resultant braking force exerted upon travel, in the ellipse of contact, by the ground on the tread (1) tends to straighten the incisions (30) toward a zero inclination with respect to said perpendicular (P) to the tread (1), said incisions (30) being of a width other than zero and less than 3 mm, transverse and substantially parallel to each other, characterised in that the incisions are spaced circumferentially by a pitch of between 0.005 and 0.013 times the circumferential length of the tyre, measured in the equatorial plane, and all the incisions (30) are inclined in the same direction, the tread having, in the axial portion thereof contained between the two axially outermost grooves (10, 11), a transverse radius of curvature ($R_T$) at least equal to 50% of the equatorial radius of curvature ($R_E$) of the tyre mounted on its nominal operating rim, inflated to its recommended pressure of over 5 bar.

2. A tread according to Claim 1, characterised in that it comprises at most two wide grooves (10) and narrow grooves (11), the width $l_1$ of the wide grooves being greater than 1.7 times the square root of the height $h_1$ of the largest wall of a groove (10) and the width $l_2$ of a narrow groove being less than 1.2 times the square root of the height $h_2$ of the largest wall of the groove (11).

3. A tread according to Claim 2, characterised in that the two wide grooves (10) are axially spaced apart by a width $L_3$ at most equal to 0.45 L, L being the width of the tread (1), and are located symmetrically on opposite sides of the equatorial line XX'.

4. A tread according to Claim 2, characterised in that it comprises a single wide groove (10) located in the centre of the tread, at least four narrow grooves (11) being located on opposite sides of the central wide groove (10).

5. A tread according to one of Claims 1 to 4, characterised in that the wide groove(s) (10) is (are) provided with one or more non-incised steps or beads in relief (4), the height $h_C$ of which is between 0.90 and 0.50 times the height $h_D$ of the adjacent elements in relief (31), the heights $h_C$ and $h_D$ being measured with respect to the bottom of the circumferential grooves (12) created by the walls (41) of the step (4) and the walls of the elements in relief (31), each groove (12) having an axial width ($l_3$) at most equal to 0.35 times the width ($l_1$) of the initial wide groove (10).

6. A tread according to one of Claims 1 to 4, characterised in that the height $h_F$ of the wall (301) of each element in relief (31) located on the trailing edge (FU) side of the element is greater than the height $h_A$ of the wall (302) of the adjacent element in relief located on the leading edge side of the adjacent element, these two heights being measured parallel to the direction of the incisions, and the difference $h_F - h_A$ being at most equal to 25% of the height $h_A$.

7. A tread according to one of Claims 1 to 5, characterised in that the ribs 21 at the edges of the tread 1 do not have incisions 30, the axially outer heights $h_E$ of the grooves 11 furthest axially from the axis XX' being smaller than the axially inner heights $h_I$ of the same grooves 11, the difference $h_I - h_E$ being between 0.05 and 0.50 times the axially inner height $h_I$.

FIG. 1

FIG.2A

FIG. 6

**FIG. 3**

**FIG. 4**

FIG. 5

FIG. 7

FIG. 8